# EUROPÄISCHE PATENTANMELDUNG

(11) **EP 0 952 336 A2**
(43) Veröffentlichungstag der Anmeldung: **27.10.1999**
(21) Anmeldenummer: 99104885.1
(22) Anmeldetag: 11.03.1999
(51) Int. Cl.: F03B 15/14

(54) **Einrichtung zur Regelung der Saugwassersäulenhöhe einer Durchströmturbine**

(30) Priorität: 23.04.1998 DE 19818330
(71) Anmelder: WWU Umweltelektronik GdbR, 95683 Ebnath (DE)
(72) Erfinder: Sticht, Wolfgang, 95697 Nagl (DE); Nickl, Walter, 95683 Ebnath (DE)
(74) Vertreter: Herrmann-Trentepohl, Werner, Dipl.-Ing.

(57) **Zusammenfassung**

Eine Einrichtung zur Regelung der Saugwassersäulenhöhe an einer Durchströmturbine, welche ein gegen den Wasserstrom und zur Wasseroberfläche hin gerichtetes Einlaufrohr (1), ein Turbinengehäuse (2), in welchem mindestens ein Düsensteuerwerk (3) und ein Laufrad (4) angeordnet sind, ein Saugrohr (5), welches von der Unterseite des Turbinengehäuses (2) senkrecht zum Unterwasser (6) führt, sowie ein im Turbinengehäuse (2) oberhalb der Mitte des Turbinenläufers angeordnetes Belüftungsventil (7) umfaßt, weist je einen Öffnungswinkelsensor (11), der am Stellantrieb für jedes Düsensteuerwerk (3) angeordnet ist, einen Drucksensor (12) zur Ermittlung des Druckes innerhalb des Turbinengehäuses (2), einen Drehzahlmesser (13) zur Ermittlung der Drehzahl eines am Laufrad (4) angeordneten Generators (G) und einen Wirkleistungsmesser (14) zur Ermittlung der Wirkleistung des Generators (G), welche mit der Eingangsseite eines vorzugsweisese selbstregelnden und lernfähigen Mikrocomputers (30) insbesondere einem Mikrocomputer mit Fuzzy-Logik, verbunden sind, sowie einen gesteuerten Antrieb (22) für das Belüftungsventil (7), welcher über einen Digitalsteuerwandler (35) mit der Ausgangsseite des Mikrocomputers (30) verbunden ist, auf.

## Beschreibung

Die Erfindung betrifft eine Einrichtung zur Regelung der Saugwassersäulenhöhe einer Durchströmturbine zwecks Optimierung der Wirkleistung eines mit der Turbine verbundenen Generators.

Bei derartigen Durchströmturbinen mit einem unterhalb des Turbinenläufers befindlichen Saugrohr wird die Gesamtfallhöhe GH des Wassers und damit die Leistung der Turbine sowohl durch die Druckwassersäule DWS als auch durch die Saugwassersäule SWS bestimmt. Während die Druckwassersäule, die sich aus der Wasserhöhe des Oberwassers OW bis zur Mitte M des Turbinenläufers ergibt, nahezu konstant bleibt, ist die Saugwassersäule durch die ständige Änderung des Wasserdurchflusses einer fortwährenden Höhenänderung unterworfen.

Um die Saugwassersäulenhöhe an solchen Turbinen regeln zu können, ist es bekannt, ein von Hand steuerbares mechanisches Belüftungsventil einzusetzen, welches den Druck im Turbinengehäuse konstant halten soll. Die Einstellung dieses mechanischen Belüftungsventils erfolgt entsprechend den Herstellerangaben, wonach die Turbine mit einer Leistung zwischen Dreiviertel- und Vollast betrieben werden soll. Mit Hilfe des Belüftungsventils wird versucht, den Wasserstand dementsprechend konstant zu halten.

Diese bekannten Regelungseinrichtungen mit einem mechanischen Belüftungsventil haben den Nachteil, daß der Betreiber einer solchen Anlage, um eine optimale Leistung zu erzielen, laufend den Wasserstand im Saugrohr kontrollieren und die Einstellung des Belüftungsventiles ständig den neuen Gegebenheiten anpassen muß. Sobald der Wasserdurchfluß in der Turbine kleiner wird, sinkt die Wasserhöhe im Turbinenauslauf, und dadurch fällt die Wassersäule bei gleich eingestelltem Druck, so daß die Anlage an Leistung verliert, weil die Gesamtfallhöhe reduziert ist. Wenn andererseits die Turbine mit Vollast läuft, z. B. bei Hochwasser, steigt der Unterwasserstand UW an, die Wassersäule steigt hoch und kann schließlich den Turbinenläufer überfluten, so daß dieser in starkem Maße abgebremst wird. Dadurch verringert sich die Leistung ebenfalls beträchtlich.

Auf Grund der sich fortlaufend ergebenden Änderungen des Wasserdurchflusses ist es praktisch nicht möglich, mit dem bekannten mechanischen Belüftungsventil die Höhe der Saugwassersäule in einer Durchströmturbine im Sinne einer Leistungsoptimierung ständig nachzuregeln.

Der Erfindung liegt daher die Aufgabe zugrunde, eine Einrichtung zur Regelung der Saugwassersaulenhöhe einer Durchströmturbine zu schaffen, die eine kontinuierliche Regelung der Saugwassersäulenhöhe zwecks fortwährender Leistungsoptimierung der Turbine ermöglicht.

Die Aufgabe wird erfindungsgemäß durch die kennzeichnenden Merkmale des Patentanspruches 1 gelöst. Vorteilhafte Ausführungsformen sind Kennzeichen der Unteransprüche 2 bis 8.

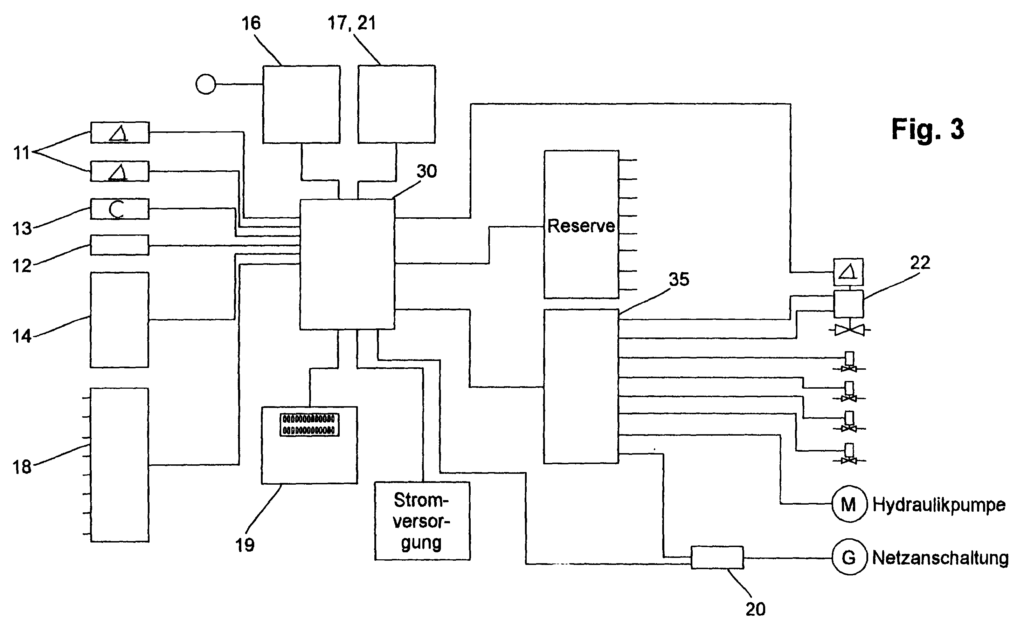

Die Erfindung soll nachfolgend anhand der Figuren 1 bis 3 näher erläutert werden.
- Fig. 1: zeigt eine Durchströmturbine des Standes der Technik, bei welcher ein mechanisches Belüftungsventil am Turbinengehäuse zur Regelung der Saugwassersäulenhöhe angeordnet ist,
- Fig. 2: zeigt eine Durchströmturbine, welche mit einer erfindungsgemäßen Regelungseinrichtung ausgerüstet ist und
- Fig. 3: zeigt das Blockschaltbild der erfindungsgemäßen Regelungseinrichtung.

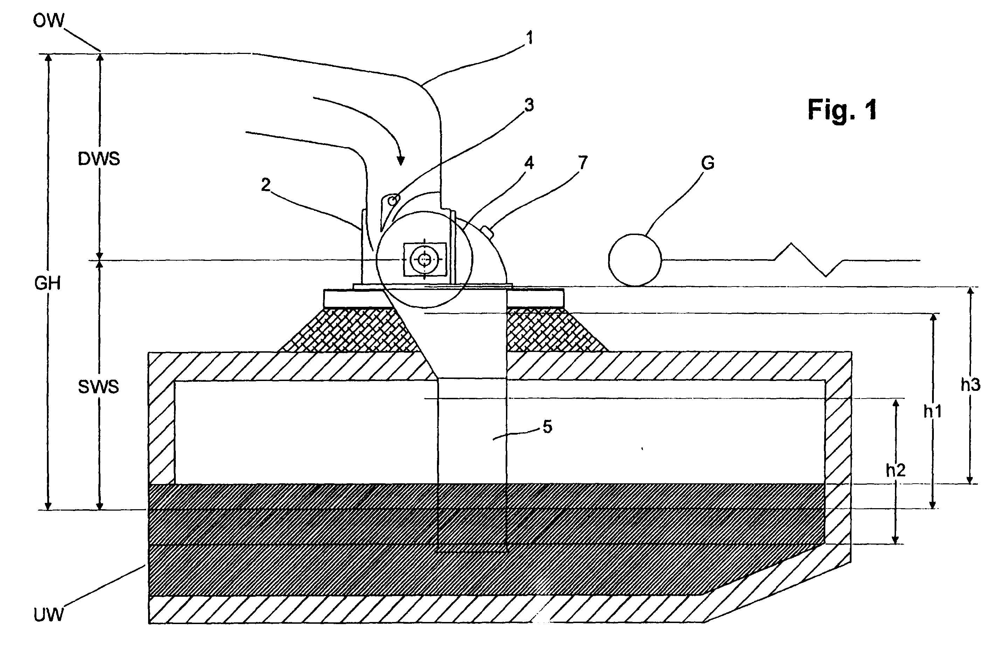

In Figur 1 ist eine bekannte Durchströmturbine mit handgesteuertem Belüftungsventil 7 dargestellt.

Das Düsensteuerwerk 3 für die Turbine wird in Abhängigkeit des oberen Wasserpegels OW, um Pegeldifferenzen entsprechend den wasserwirtschaftlichen Vorschriften zu minimieren, in der Weise automatisch geregelt, daß bei ansteigendem Pegel die Durchflußmenge vergrößert und bei fallendem Pegel verkleinert wird. Infolge der unterschiedlichen Durchflußmengen ergibt sich auch ein unterschiedlicher Wasserstand im Saugrohr 5. Bei geringen Durchflußmengen kann die Saugwassersaulenhöhe z. B. auf eine Höhe h2 absinken, wodurch die Leistung des Generators G aufgrund des ungenügenden Vakuums im Saugrohr 5 vermindert wird.

Andererseits kann bei großen Durchflußmengen und bei Rückstau im Unterwasserauslauf die Saugwassersäule auf eine Höhe h3 ansteigen, die das Laufrad 4 überflutet und bremst und dadurch auch einen starken Leistungsabfall des Generaters bewirkt.

Um solche extremen Differenzen in der Saugwassersäulenhöhe ausgleichen zu können, wurde in den Turbinengehäusen bisher entsprechend einer Erfindung von Osberger ein mechanisches Belüftungsventil 7 vorgesehen, welches bei zu hohem Wasserstand weiter geöffnet und bei zu geringem Wasserstand weiter geschlossen werden konnte. Weil sich die Durchflußmengen jedoch fortwährend ändern, ist mit dieser Handsteuerung des Belüftungsventiles 7 nur die Verhinderung von sehr groben Leistungsabfallen des Generators G möglich.

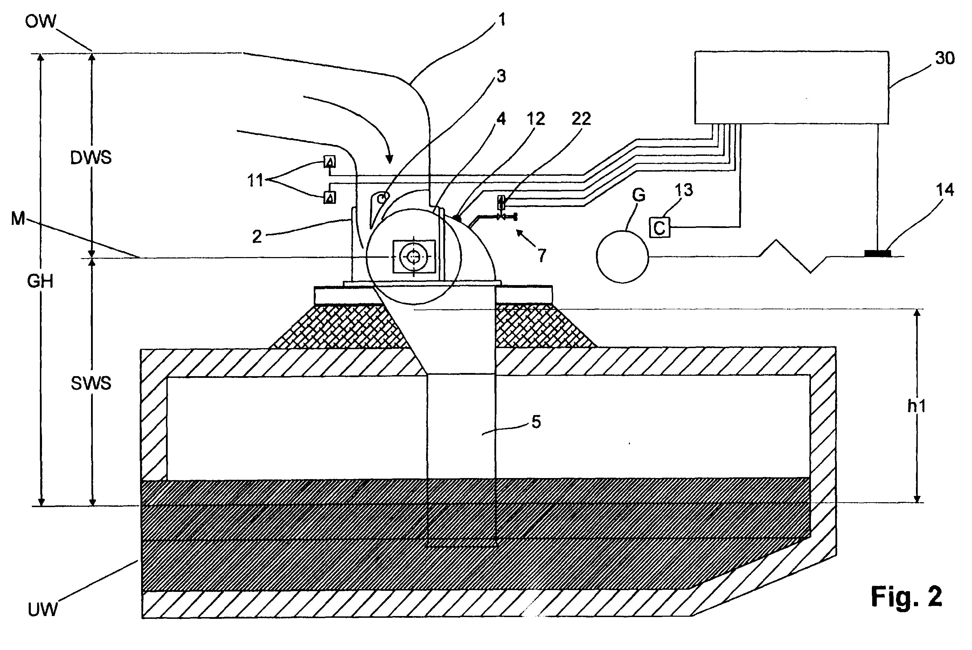

Mit Hilfe der erfindungsgemäßen Einrichtung zur Regelung der Saugwassersäulenhöhe, welche in Figur 2 dargestellt ist, läßt sich dagegen eine optimale Höhe h1 der Saugwassersäule einregulieren, bei welcher der Generator G eine optimale Wirkleistung abgibt. Die erfindungsgemäße Einrichtung zur Regelung der Saugwassersäulenhöhe kann bei den bekannten Durchströmturbinen eingesetzt werden, welche ein gegen den Wasserstrom und zur Wasseroberfläche hin gerichtetes Einlaufrohr 1, ein Turbinengehäuse 2, in welchem im wesentlichen mindestens ein Düsensteuerwerk 3 und ein Laufrad 4 angeordnet sind, ein Saugrohr 5, welches von der Unterseite des Turbinengehäuses 2 senkrecht zum Unterwasser UW führt, sowie ein mit dem Turbinengehäuse 2 oberhalb der Mitte des Turbinenläufers angeordnetes Belüftungsventil 7 umfassen. Sie weist je einen Öffnungswinkelsensor 11, der am Stellantrieb für jedes Düsensteuerwerk 3 angeordnet ist, einen Drucksensor 12 zur Ermittlung des Druckes innerhalb des Turbinengehäuses 2, einen Drehzahlmesser 13 zur Ermittlung der Drehzahl eines sm Laufrad 4 angeordneten Generators G und einen Wirkleistungsmesser 14 zur Ermittlung der Wirkleistung des Generators G auf, welche mit der Eingangsseite eines selbstregelnden, lernfähigen Mikrocomputers 30 verbunden sind, sowie einen gesteuerten Antrieb 22 für das Belüftungsventil 7, welcher über einen Digitalsteuerwandler 35 mit der Ausgangsseite des Mikrocomputers 30 verbunden ist, auf.

Die in Betrieb befindlichen Durchströmturbinen mit mechanischem Belüftungsventil 7 können in einfacher Weise auf die erfindungsgemäße Einrichtung zur Regelung der Saugwassersäulenhöhe umgerüstet werden, wodurch es möglich wird, die Wirkleistung des mit der Turbine verbundenen Generators G zu optimieren. Dazu wird das mechanische Belüftungsventil 7 am Turbinengehäuse abgebaut und durch ein elektrisches Regelventil mit Öffnungswinkelgeber ersetzt. Außerdem müssen ein Drucksensor 12 im Turbinengehäuse 2, Drehzahl- und Wirkleistungssensoren 13, 14 im Generator G sowie ein Öffnungswinkelsensor 11 am Stellantrieb jedes Düsensteuerwerkes 3 nachgerüstet werden.

Die erfindungsgemäße Einrichtung ermittelt anhand des Unterdrucks im Turbinengehäuse 2, der Generatordrehzahl, der Wirkleistung und der Düsenstellung jedes Düsensteuerwerkes 3 die momentanen Betriebsdaten der Turbine und optimiert die Saugwassersäulenhöhe, so daß immer die höchste Wirkleistung erzielt wird. Die Wassersäule h1 wird mit dieser Einrichtung immer auf die optimale Leistung der Turbine eingestellt.

Die erfindungsgemäße Einrichtung umfaßt als Kernstück einen Mikrocomputer 30, vorzugsweise einen selbstregelnden, lernfähigen Mikrocomputer 30. Besonders bevorzugt wird ein Mikrocomputer 30 mit Fuzzy-Logik eingesetzt. Bei Einsatz eines derartigen Mikrocomputers 30 brauchen vom Betreiber der Anlage keine Parameter vorgegeben zu werden. Die Einrichtung lernt im Betriebsablauf zwischen Null- und Vollast, die optimale Einstellung zu finden und speichert diese dann ab. Wird eine bauliche Veränderung an der Turbine ausgeführt, erkennt der Mikrocomputer die neuen Parameter und optimiert die Anlage entsprechend.

Die erfindungsgemäße Einrichtung kann zusätzlich z. B. eine Schnittstelle 16 für die Ferndatenübertragung, Ausgänge 17, 21 für eine Rechenansteuerung zwecks Rechenreinigung sowie für eine Fernwasserstandsmessung und digitale Eingänge 18 für Störmeldungen besitzen. Weiterhin kann der Mikrocomputer mit einer Anzeige- und Bedieneinheit 19 sowie einem Sicherheitskreis 20 verbunden sein.

Mit der erfindungsgemäßen Regelungseinrichtung läßt sich eine Leistungssteigerung derartiger Turbinen von bis zu etwa 10 % erzielen.

## Patentansprüche

1. Einrichtung zur Regelung der Saugwassersäulenhöhe einer Durchströmturbine, welche ein gegen den Wasserstrom und zur Wasseroberfläche hin gerichtetes Einlaufrohr (1), ein Turbinengehäuse (2), in welchem mindestens ein Düsensteuerwerk (3) und ein Laufrad (4) angeordnet sind, ein Saugrohr (5), welches von der Unterseite des Turbinengehäuses (2) senkrecht zum Unterwasser (6) führt, sowie ein im Turbinengehäuse (2) oberhalb der Mitte des Turbinenläufers angeordnetes Belüftungsventil (7) umfaßt, **gekennzeichnet durch** je einen Öffnungswinkelsensor (11), der am Stellantrieb für jedes Düsensteuerwerk (3) angeordnet ist, einen Drucksensor (12) zur Ermittlung des Druckes innerhalb des Turbinengehäuses (2), einen Drehzahlmesser (13) zur Ermittlung der Drehzahl eines am Laufrad (4) angeordneten Generators (G) und einen Wirkleistungsmesser (14) zur Ermittlung der Wirkleistung des Generators (G), welche mit der Eingangsseite eines Mikrocomputers (30) verbunden sind, sowie einen gesteuerten Antrieb (22) für das Belüftungsventil (7), welcher über einen Digitalsteuerwandler (35) mit der Ausgangsseite des Mikrocomputers (30) verbunden ist.

2. Einrichtung nach Anspruch 1, **gekennzeichnet durch** einen selbststeuernden, lernfähigen Mikrocomputer (30).

3. Einrichtung nach Anspruch 1 und 2, **dadurch gekennzeichnet, daß** der Mikrocomputer (30) eine Fuzzy-Logik-Regelung aufweist.

4. Einrichtung nach einem oder mehreren der vorhergehenden Ansprüche, **gekennzeichnet durch** eine mit dem Mikrocomputer (30) verbundene Anzeige- und Bedieneinheit (19).

5. Einrichtung nach mindestens einem der vorhergehenden Ansprüche, **gekennzeichnet durch** eine Schnittstelle (16) des Mikrocomputers (30) zur Ferndatenübertragung.

6. Einrichtung nach mindestens einem der vorhergehenden Ansprüche, **gekennzeichnet durch** einen Ausgang (17) des Mikrocomputers (30) für eine Rechenansteuerung.

7. Einrichtung nach mindestens einem der vorhergehenden Ansprüche, **gekennzeichnet durch** einen Ausgang (21) des Mikrocomputers (30) für eine Fernwasserstandsmessung.

8. Einrichtung nach mindestens einem der vorhergehenden Ansprüche, **gekennzeichnet durch** mit dem Mikrocomputer (30) verbundene Störmeldeeingänge (18).
